# EUROPÄISCHE PATENTSCHRIFT

(11) **EP 1 901 980 B1**
(45) Veröffentlichungstag und Bekanntmachung des Hinweises auf die Patenterteilung: **16.09.2009**
(21) Anmeldenummer: 07722424.4
(22) Anmeldetag: 11.05.2007
(51) Int. Cl.: B65G 39/02

(54) **FÖRDERROLLE**
TRANSPORT ROLLER
ROULEAU DE TRANSPORT

(30) Priorität: 22.05.2006 DE 102006024125
(43) Veröffentlichungstag der Anmeldung: 26.03.2008
(73) Patentinhaber: Sandvik Mining and Construction Supply GmbH, 38170 Schöppenstedt (DE)
(72) Erfinder: HOFMAYER, Bernhard, 38170 Schöppenstedt (DE)
(74) Vertreter: Rehmann, Thorsten
(86) Internationale Anmeldenummer: PCT/DE2007/000876
(87) Internationale Veröffentlichungsnummer: WO 2007/134577

(56) Entgegenhaltungen:
- EP-A2- 1 477 248
- CN-A- 1 817 761
- DE-A1- 3 024 750
- DE-B- 1 180 311
- DE-U1-202005 013 767
- FR-A- 987 860
- FR-E- 72 039
- US-A- 4 502 310
- US-A- 4 790 421

## Beschreibung

Die vorliegende Erfindung betrifft ein Verfahren zum Herstellen einer Rolle für einen Förderer, insbesondere Gurt- oder Bandförderer, mit einem Rollenkörper und einer in mindestens zwei Lagern gelagerten Achswelle, wobei der Rollenkörper einen hohlzylindrischen Rollenmantel aufweist, der an seiner Innenseite im mittleren Abschnitt mit einer Verstärkung versehen ist und an dessen beiden äußeren Endabschnitten Lagersitze für die Lager vorgesehen sind, wobei der Rollenmantel und die Verstärkung einstückig sind.

Eine derartige Rolle ist beispielsweise aus der US 4,790,421 A bekannt.

Eine andere Rolle für einen Förderer bzw. Förderrolle ist beispielsweise aus der DE 103 42 099 A1 bekannt. Üblicherweise wird in einer Förderanlage eine Vielzahl solcher Förderrollen parallel nebeneinander in ein Gestell eingesetzt, um die Förderstrecke zu bilden. Über diese Förderrollen läuft ein Fördergurt. Für das Fördern von Schüttgut, beispielsweise im Bergbau, werden jeweils drei Rollen zueinander V-förmig angeordnet, so dass der Gurt eine Art Wanne ausbildet. Die Länge der einzelnen Förderstrecken in solchen Förderanlagen kann bis zu mehrere Kilometer betragen.

Durch das hohe Gewicht des Fördergutes und der hohen zu übertragenden Kräfte müssen die Förderrollen auch entsprechend stabil mit relativ hohen Wandstärken ausgebildet sein, so dass sie entsprechend schwer sind. Das Gewicht einer Rolle ist bei der Auslegung des Förderers eine nicht unbeachtliche Größe, insbesondere wenn die Förderstrecke mehrere Kilometer beträgt. Da die Förderrollen in Rotation versetzt werden müssen, muss das Antriebssystem entsprechend leistungsstark ausgebildet sein, um die erforderliche Energie bereitstellen zu können.

Die äußere Mantelfläche der Förderrolle ist idealerweise in axial bzw. Längsrichtung exakt gerade und im Querschnitt exakt kreisförmig. Diese Geometrie wird in einem unbelasteten Zustand weitgehend erreicht. Bei der Verwendung, also wenn das Fördergut auf der Rolle lastet, wirkt allerdings auf die im Wesentlichen horizontal ausgerichtete Förderrolle durch die Gewichtskraft des Fördergutes eine vertikale Kraft, die zu einer Verformung der Förderrolle führt.

Durch die Rotation der Rolle unterliegt die Verformung einer ständigen Veränderung, wodurch permanent Energie für die Verformung der Rotationsenergie entzogen wird. Insgesamt führt dies zu einem höheren Energieverbrauch zum Betreiben einer Förderanlage mit der Vielzahl derartiger Förderrollen.

Bei einer Rolle aus einem zylindrischen Vollkörper führt die Verformung zu einer Durchbiegung nach unten. Die Förderrolle ist somit in Längsrichtung nicht mehr gerade. Dieses nachteilige Durchbiegeverhalten tritt ebenfalls bei hohlzylindrischen Rollenkörpern mit dicken Wandstärken auf.

Bei zunehmend dünner werdenden Wandstärken nimmt das Maß der Durchbiegung immer mehr ab. Stattdessen findet dann zunehmend eine andere Verformung statt. Ist der Querschnitt der Förderrolle in dem unbelasteten Zustand kreisförmig, so wird der Querschnitt bei dünnen Wandungen durch die Last des Fördergutes im oberen Bereich abgeflacht. Mit anderen Worten, während die untere Rollenhälfte in etwa halbkreisförmig verbleibt, weist die obere Rollenhälfte in etwa die Form einer HalbEllipse auf.

Die durch die Rotation sich ständig verändernde Abflachung des Rollenkörpers erfordert ebenfalls Energie, die der Antriebsleistung der Förderanlage entzogen wird und folglich zum Antreiben der Förderrollen nicht mehr zur Verfügung steht.

Die US 4,790,421 A offenbart eine Rolle, deren hohlzylindrischer Rollenmantel an seiner Innenseite mehrere Verstärkungsrippen aufweist, die einerseits die Stabilität der Rolle erhöhen sollen und deren End- bzw. Seitenflächen für die Fixierung des Rollenmantels relativ zu den Lagersitzen sorgen.

Die FR 72 039 E offenbart Rollen, bei denen zwischen der Achswelle und dem hohlzylindrischen Rollenmantel in regelmäßigen Abständen Stützkonstruktionen vorgesehen sind, um die Stabilität der Rolle zu erhöhen.

Die DE 1 180 311 B offenbart eine Rolle, deren Achswelle nur an einem Ende befestigt ist und die um eine bestimmte senkrecht zu dieser Achswelle stehende Achse schwenkbar gelagert ist.

Aus der US 4,502,310 A ist eine Rolle bekannt, bei der zur Erhöhung der Verlässlichkeit und Verlängerung der Lebensdauer und zur Reduzierung des Materialverbrauchs bei ihrer Herstellung die Lagersitze einstückig mit dem Rollenkörper ausgebildet sind.

Auch die DE 30 24 750 A1 offenbart ein Verfahren, bei dem die Lagersitze am äußeren Ende des Rollenkörpers aus dem Mantelkörperende herausgeformt werden.

Die FR 987 860 A offenbart eine Rolle, bei der die Lager aus einem Kunststoff hergestellt sind, um das Gewicht der Rolle zu reduzieren.

Nachteilig ist, dass die Maßnahmen zur Erhöhung der Stabilität der Rolle komplizierte, zeitaufwändige und damit teure Produktionsschritte nach sich ziehen.

Vor diesem Hintergrund ist es die Aufgabe der vorliegenden Erfindung, eine Rolle mit großer Stabilität, die einfach, kostengünstig und schnell hergestellt werden kann, und ein Verfahren zum Herstellen einer solchen Rolle bereitzustellen.

Diese Aufgabe wird durch ein Verfahren zum Herstellen einer Rolle für einen Förderer mit den Merkmalen des Anspruchs 1 sowie eine Rolle für einen Förderer mit den Merkmalen des Anspruchs 5 gelöst.

Bei dem Verfahren zum Herstellen einer Rolle für einen Förderer der Eingangs beschriebenen Art ist erfindungsgemäß vorgesehen, dass die Verstärkung durch Abstrecken, insbesondere Kaltabstrecken eines Rohlings erzeugt wird und der Rollenkörper durch das Abstrecken seine endgültige Außenform erhält.

Durch die Ausbildung der Verstärkung des Rollenmantels der Rollenkörper durch Abstrecken eines Rohlings und dadurch, dass der Rollenkörper dabei seine endgültige Außenform erhält, wird eine anschließende spanabhebende Bearbeitung vermieden, wodurch Faserrisse im Materialgefüge verhindert werden, wodurch die Bruchfestigkeit der Rolle erhöht wird.

Durch die Verstärkung wird eine federnde Verformung der Förderrolle unter Last, insbesondere die Abflachung an der Oberseite, wirksam verhindert. Ferner reichen die erfindungsgemäßen Wandstärken nicht aus, dass die Rolle sich unter der Last des Fördergutes durchbiegt. Da die Verformung des Rollenkörpers ausbleibt, wird keine Verformungsenergie der Rotationsenergie entzogen, wodurch die Energiebilanz der gesamten Förderanlage verbessert wird. Schließlich kann durch Verminderung der Wandstärke in den unverstärkten Abschnitten des Rollenmantels Material eingespart werden. Das Gewicht der Rolle wird dadurch reduziert, wodurch zusätzlich die zur Rotation erforderliche Energie reduziert wird.

Damit die äußere Mantelfläche des Rollenkörpers in Längsrichtung gerade ist, ist die Verstärkung an der Innenseite des Rollenmantels vorgesehen.

Zudem sind bei einer erfindungsgemäßen Rolle der Rollenmantel und die Verstärkung einstückig.

Bei einer erfindungsgemäße Rolle ist vorgesehen, dass die Verstärkung durch Abstrecken, insbesondere Kaltabstrecken, eines Rohlings erzeugt wird und die Wandstärke des Rollenmantels in dem verstärkten Abschnitt etwa 6 mm bis etwa 12 mm beträgt. Bevorzugter beträgt die Wandstärke dort etwa 7 mm bis etwa 11 mm, am bevorzugtesten etwa 8 mm bis etwa 10 mm.

In vorteilhafter Weise beträgt die Wandstärke des Rollenmantels in den unverstärkten Abschnitten etwa 3 mm bis etwa 8 mm. Bevorzugter beträgt die Wandstärke dort etwa 4 mm bis 7 mm, am bevorzugtesten etwa 4,5 mm bis 6 mm.

Bei einer erfindungsgemäßen Rolle ist in vorteilhafter Weise vorgesehen, dass die Wandstärke des Rollenmantels von den unverstärkten Abschnitten bis zum verstärkten Abschnitt stetig zunimmt. Hierdurch werden kantige Wandstärkeänderungen vermieden, die bruchanfällig sind.

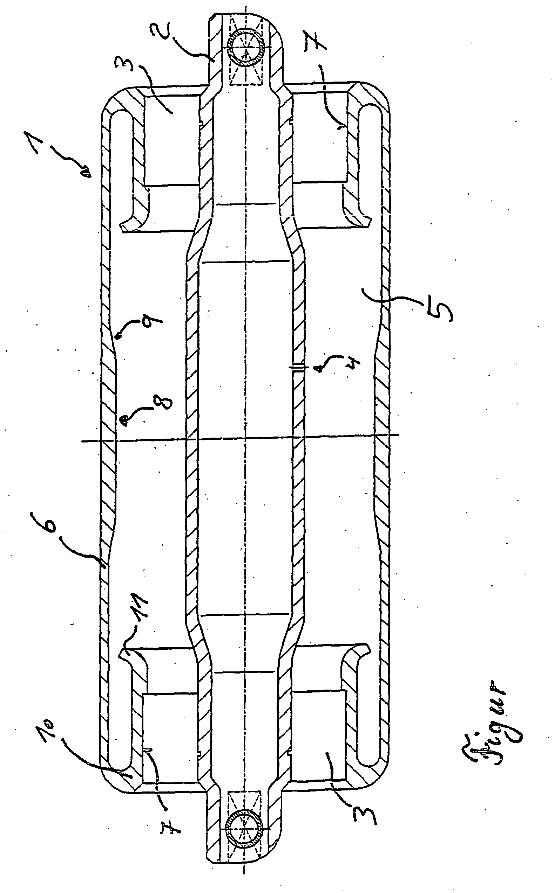

Nachfolgend wird die vorliegende Erfindung anhand der detaillierten Beschreibung eines Ausführungsbeispiels unter Bezug auf die Figur beispielhaft näher erläutert.

Die einzige Figur zeigt einen Längsschnitt durch eine erfindungsgemäße Rolle für einen Band- oder Gurtförderer. Eine Vielzahl derartiger Förderrollen wird parallel zueinander und beabstandet entlang der Förderstrecke angeordnet und ein Fördergurt (nicht dargestellt) läuft an der Oberseite der Rollen in die Förderrichtung. Die Förderstrecke kann eine Länge von mehreren Kilometern aufweisen. Damit der Fördergurt nicht vorzeitig durch Reibung mit den Rollen verschleißt, sind die Förderrollen unterhalb des Fördergurtes drehbar gelagert und werden in Rotation versetzt. Die Gurtbreite beträgt beispielsweise 2200 mm. Zur Ausbildung eines wannenförmigen Gurtes, um beispielsweise Schüttgut, wie Erze, Kies oder dergleichen, zu transportieren, können drei Rollen in V-Form angeordnet werden.

Die erfindungsgemäße Förderrolle weist einen Rollenkörper 1 und eine Achswelle 2 auf, die in zwei Wälzlagern 3 gelagert ist. Die Wälzlager 3 sind nach außen durch eine geeignete Dichtung, beispielsweise eine Labyrinthdichtung (nicht dargestellt) abgedichtet. Die Achswelle 2 ist hohl ausgebildet und ihr mittlerer Bereich ist gegenüber den beiden Enden, die in den Wälzlagern 3 gelagert sind, im Durchmesser größer ausgebildet. In dem durchmessergrößeren Bereich der Achswelle 2 ist eine radiale Bohrung 4 eingebracht, über die ein Luftaustausch zwischen dem Inneren 5 der Rolle und der Atmosphäre erfolgen kann, der aufgrund von bei dem Betrieb entstehenden Temperaturunterschieden erforderlich ist. Im Betrieb erwärmt sich die Rolle und die im Inneren 5 des Rollkkörpers 1 eingeschlossene Luft dehnt sich aus. Wird der Förderer stillgesetzt, kühlt sich die Rolle ab und die eingeschlossene Luft zieht sich zusammen. Durch die Bohrung 4 in der Achswelle 2 ist der Luftaustausch nicht nur schnell möglich, sondern es ist auch sichergestellt, dass die Luft nicht durch die Wälzlager 3 strömt und Verunreinigungen mitzieht, die die Lebensdauer der Lager 3 reduzieren.

Der Rollenkörper 1 weist einen hohlzylindrischen Rollenmantel 6 auf, an dessen beiden äußeren Endabschnitten Lagersitze 7 für die Lager 3 vorgesehen sind. Im mittleren Abschnitt des Rollenmantels 6 ist die Dicke der Wandung erhöht, so dass eine Verstärkung 8 ausgebildet ist, die sich an der Innenseite des Rollenmantels 6 befindet. Die Verstärkung 8 ist vollumfänglich an dem kreisförmigen Querschnitt des Rollenmantels 6 vorgesehen.

In dem mittleren, verstärkten Abschnitt mit der Verstärkung 8 ist die Wandstärke zunächst gleichmäßig ausgebildet. Anschließend folgt ein Abschnitt, in dem die Wandstärke stetig abnimmt, so dass im Längsschnitt der Figur eine Art Rampe 9 zu erkennen ist. Am Ende der Rampe 9 hat die Wandstärke den Wert für den unverstärkten Abschnitt des Rollenmantels 6 erreicht. In den äußeren, unverstärkten Abschnitten ist die Wandstärke zur Gewichtsreduzierung hinreichend dünn ausgebildet.

Die Verstärkung 8 ist mit einer bestimmten Länge vorgesehen, um eine Sattelbildung der Verformung zu vermeiden, die unter einer Belastung der Rolle auftreten würde, wenn lediglich ein verstärkender Ring an der Innenseite des Rollenmantels 6 eingesetzt. In dem Bereich des Ringes würde die Abflachung zwar vermieden, doch würden sie seitlich des Ringes aufgrund der einwirkenden Last auftreten.

Bevorzugt wird die Förderrolle aus einem Rohling hergestellt, der eine im Wesentlichen hohlzylindrische Form aufweist. Beispielsweise kann der Rohling einen Durchmesser von etwa 168,3 mm und eine Gesamtlänge von etwa 420 mm aufweisen. Die Wandstärke beträgt etwa 8,8 mm. Die Abmessungen des Rohlings haben deutlich Toleranzbereiche, so dass merkliche Abweichungen auftreten können. Insbesondere ist der Rohling nicht exakt hohlzylindrisch, d.h. der Durchmesser kann im Verlauf der Länge variieren, was in einem Längsschnitt als Krümmung zu erkennen ist.

Deshalb wird bislang bei der Herstellung einer Förderrolle der Rollenkörper an der Außenseite über die gesamte Längserstreckung überdreht. Anschließend muss durch die unterschiedliche Materialabtragung der überdrehte Rollenkörper ausgewuchtet werden.

Bei der erfindungsgemäßen Förderrolle wird die Form des Rohlings durch Strecken, insbesondere Kaltabstrecken, verändert. Durch diese Abstreckung wird sowohl der Durchmesser als auch die Wandstärke vermindert. Die Gesamtlänge des Rollenkörpers 1 nimmt im Gegenzug zu. Der Durchmesser beträgt nach der Umformung beispielsweise etwa 159 mm und die unverstärkte Wandstärke etwa 4,5 mm. Im mittleren Abschnitt mit der Verstärkung 8 beträgt die Wandstärke beispielsweise etwa 8 mm. Die Gesamtlänge des Rollenkörpers beträgt beispielsweise etwa 720 mm, die Länge der Verstärkung etwa 80 mm und die der Rampen 9 auf jeder Seite etwa 35 mm.

Die Kaltverformung führt zu einer Materialverfestigung aufgrund einer Gefügeverfeinerung, wodurch der Rollenkörper 1 verschleißfester wird. Der Rollenkörper 1 erhält durch die Abstreckung seine endgültige Außenform. Die äußere Mantelfläche des Rollenkörpers 1 ist dann in Längsrichtung gerade und im Querschnitt kreisförmig. Eine spanabhebende Bearbeitung des Rollenmantels 6 an der Außenseite ist nicht erforderlich. Dadurch werden Unwuchten bei der späteren Rotation der Rolle vermieden. Ein aufwändiges Auswuchten der Rolle entfällt, wodurch die Verfahrensschritte für die Herstellung und folglich auch die Herstellkosten reduziert sind.

Zur Ausbildung der Lagersitze 7 werden die Enden des hohlzylindrischen Rollenkörpers 1 axial nach innen umgeformt, indem das den Rollenkörper 1 bildende Metallrohr über einen Innendorn gezogen und induktiv erwärmt wird. Das erwärmte Rohr wird dann in Rotation versetzt und ein entsprechend profiliertes Formwerkzeug fährt rotierend auf das Rohrende auf und bördelt die Wandung nach innen.

Das Material der Wandung fließt beim Umformen in radiale Richtung, so dass die Wandstärke der entstehenden Einstülpung 10 wesentlich größer ist als die Wandstärke des nicht eingestülpten Rohrabschnittes. Durch entsprechende Profilierung des Formwerkzeuges wandern beim Umformen die Enden der Einstülpung 10 nach radial außen und bilden einen Stützring 11 aus, durch den die Stabilität gegen Biegung des Rollenkörpers 1 bzw. der Lagersitze 7 erhöht wird. Nach dem Umformen werden in der Einstülpung 10 die Lagersitze 7 gefräst, die die Wälzlager 3 aufnehmen.

Die erfindungsgemäße Förderrolle weist bei einem gegenüber herkömmlichen reduzierten Materialverbrauch eine verbesserte Formstabilität auf. Dadurch werden federnde Formänderungen während der Rotation vermieden, was zu einer verbesserten Energiebilanz führt. Denn es können pro Rolle mit einem Durchmesser von etwa 219 mm und einer Länge von etwa 1150 mm etwa 3 W Leistung eingespart werden. Bei einer kilometerlangen Förderanlage mit einer Vielzahl an Rollen erreicht diese Leistungseinsparung eine beachtliche Größe. Ferner weist die erfindungsgemäße Förderrolle gegenüber herkömmlichen Rollen verminderte Laufgeräusche auf.

Schließlich ist die Herstellung der erfindungsgemäßen Förderrolle durch den kalibrierenden Fertigungsprozess kosteneinsparend. Denn durch das Abstrecken erfährt die Rolle ihre endgültige Außenform. Ein Überdrehen bzw. ein anderes spanabhebendes Behandeln der Mantelfläche sowie ein Auswuchten der Rolle fallen ersatzlos fort.

## Patentansprüche

1. Verfahren zum Herstellen einer Rolle für einen Förderer, insbesondere Gurt- oder Bandförderer, mit einem Rollenkörper (1) und einer in mindestens zwei Lagern (3) gelagerten Achswelle (2), wobei der Rollenkörper (1) einen hohlzylindrischen Rollenmantel (6) aufweist, der an seiner Innenseite im mittleren Abschnitt mit einer Verstärkung versehen ist und an dessen beiden äußeren Endabschnitten Lagersitze (7) für die Lager (3) vorgesehen sind, wobei der Rollenmantel (6) und die Verstärkung (8) einstückig sind, **dadurch gekennzeichnet, dass** zur Verstärkung des Rollenmantels (6) der Rollenkörper (1) durch Abstrecken, insbesondere Kaltabstrecken, eines Rohlings erzeugt wird und der Rollenkörper (1) durch das Abstrecken seine endgültige Außenform erhält.

2. Verfahren nach Anspruch 1, **dadurch gekennzeichnet, dass** die Wandstärke des Rollenmantels (6) in dem mittleren, verstärkten Abschnitt auf etwa 6 mm bis etwa 12 mm eingestellt wird.

3. Verfahren nach Anspruch 1 oder 2, **dadurch gekennzeichnet, dass** die Wandstärke des Rollenmantels (6) in den unverstärkten Abschnitten auf etwa 3 mm bis etwa 8 mm eingestellt wird.

4. Verfahren nach einem der vorstehenden Ansprüche, **dadurch gekennzeichnet, dass** die Wandstärke des Rollenmantels (6) von den unverstärkten Abschnitten bis zum verstärkten Abschnitt stetig zunimmt.

5. Rolle für einen Förderer, insbesondere Gurt- oder Bandförderer, mit einem Rollenkörper (1) und einer in mindestens zwei Lagern (3) gelagerten Achswelle (2), wobei der Rollenkörper (1) einen hohlzylindrischen Rollenmantel (6) aufweist, der an seiner Innenseite im mittleren Abschnitt eine Verstärkung aufweist und an dessen beiden äußeren Endabschnitten Lagersitze (7) für die Lager (3) vorgesehen sind, wobei der Rollenmantel (6) und die Verstärkung (8) einstückig sind, **dadurch gekennzeichnet, dass** zur Verstärkung des Rollenmantels (6) der Rollenkörper (1) durch Abstrecken, insbesondere Kaltabstrecken, eines Rohlings erzeugt ist, wobei die Wandstärke des Rollenmantels (6) in dem mittleren, verstärkten Abschnitt etwa 6 mm bis etwa 12 mm beträgt.

6. Rolle nach Anspruch 5, **dadurch gekennzeichnet, dass** die Wandstärke des Rollenmantels (6) in den unverstärkten Abschnitten etwa 3 mm bis etwa 8 mm beträgt.

7. Rolle nach Anspruch 5 oder 6, **dadurch gekennzeichnet, dass** die Wandstärke des Rollenmantels (6) von den unverstärkten Abschnitten bis zum verstärkten Abschnitt stetig zunimmt.

## Claims

1. Method for producing a roller for a conveyor, in particular a belt or band conveyor, with a roller body (1) and an axle shaft (2) mounted in at least two bearings (3), the roller body (1) having a hollow cylindrical roller shell (6), which is provided with a reinforcement on its inside in the central portion, and on the two outer end portions of which bearing seats (7) are provided for the bearings (3), the roller shell (6) and the reinforcement (8) being in a single piece, **characterised in that** to reinforce the roller shell (6), the roller body (1) is formed by wall ironing, in particular cold wall ironing, of a blank, and the roller body (1) receives its final outer shape owing to the wall ironing.

2. Method according to claim 1, **characterised in that** the wall thickness of the roller shell (6) is set at about 6 mm to about 12 mm in the central, reinforced portion.

3. Method according to claim 1 or 2, **characterised in that** the wall thickness of the roller shell (6) is set at about 3 mm to about 8 mm in the non-reinforced portions.

4. Method according to any one of the preceding claims, **characterised in that** the wall thickness of the roller shell (6) increases constantly from the non-reinforced portions to the reinforced portion.

5. Roller for a conveyor, in particular a belt or band conveyor, with a roller body (1) and an axle shaft (2) mounted in at least two bearings (3), the roller body (1) having a hollow cylindrical roller shell (6), which has a reinforcement on its inside in the central portion and on the two outer end portions of which bearing seats (7) are provided for the bearings (3), the roller shell (6) and the reinforcement (8) being in a single piece, **characterised in that** to reinforce the roller shell (6), the roller body (1) is produced by wall ironing, in particular cold wall ironing, of a blank, the wall thickness of the roller shell (6) being about 6 mm to about 12 mm in the central, reinforced portion.

6. Roller according to claim 5, **characterised in that** the wall thickness of the roller shell (6) is about 3 mm to about 8 mm in the non-reinforced portions.

7. Roller according to claim 5 or 6, **characterised in that** the wall thickness of the roller shell (6) increases constantly from the non-reinforced portions to the reinforced portion.

## Revendications

1. Procédé de fabrication d'un rouleau pour un transporteur, en particulier un transporteur à courroie ou un transporteur à bande, comprenant un corps roulant (1) et un arbre d'essieu (2) monté dans au moins deux paliers (3), le corps roulant (1) présentant une jupe de rouleau (6) en cylindre creux munie d'un renfort sur sa face intérieure dans la partie médiane, des sièges de palier (7) étant prévus pour les paliers (3) sur les deux parties d'extrémité extérieures de la jupe de rouleau, la jupe de rouleau (6) et le renfort (8) étant formés d'une seule pièce, **caractérisé en ce que** pour renforcer la jupe de rouleau (6) on fabrique le corps roulant (1) par étirage d'une ébauche, en particulier par étirage à froid, et le corps roulant (1) acquiert sa forme extérieure définitive grâce à l'étirage.

2. Procédé selon la revendication 1, **caractérisé en ce que** l'on ajuste l'épaisseur de paroi de la jupe de rouleau (6) dans la partie médiane renforcée, d'environ 6 mm à environ 12 mm.

3. Procédé selon la revendication 1 ou 2, **caractérisé en ce que** l'on ajuste l'épaisseur de paroi de la jupe de rouleau (6) dans les parties non renforcées d'environ 3 mm à environ 8 mm.

4. Procédé selon l'une des revendications précédentes, **caractérisé en ce que** l'épaisseur de paroi de la jupe de rouleau (6) augmente continûment depuis les parties non renforcées jusqu'à la partie renforcée.

5. Rouleau pour un transporteur, en particulier un transporteur à courroie ou un transporteur à bande, comprenant un corps roulant (1) et un arbre d'essieu (2) monté dans au moins deux paliers (3), le corps roulant (1) présentant une jupe de rouleau (6) en cylindre creux munie d'un renfort sur sa face intérieure dans la partie médiane, des sièges de palier (7) étant prévus pour les paliers (3) sur les deux parties d'extrémité extérieures de la jupe de rouleau, la jupe de rouleau (6) et le renfort (8) étant formés d'une seule pièce, **caractérisé en ce que** pour renforcer la jupe de rouleau (6) le corps roulant (1) est fabriqué par étirage d'une ébauche, en particulier par étirage à froid, l'épaisseur de paroi de la jupe de rouleau (6) dans la partie médiane renforcée allant d'environ 6 mm à environ 12 mm.

6. Rouleau selon la revendication 5, **caractérisé en ce que** l'épaisseur de paroi de la jupe de rouleau (6) dans les parties non renforcées va d'environ 3 mm à environ 8 mm.

7. Rouleau selon la revendication 5 ou 6, **caractérisé en ce que** l'épaisseur de paroi de la jupe de rouleau (6) augmente continûment depuis les parties non renforcées jusqu'à la partie renforcée.
